Europäisches Patentamt

European Patent Office

Office européen des brevets

(11) Veröffentlichungsnummer: **0 235 559 B1**

(12) **EUROPÄISCHE PATENTSCHRIFT**

(45) Veröffentlichungstag der Patentschrift: **02.05.91**

(21) Anmeldenummer: **87101057.5**

(22) Anmeldetag: **26.01.87**

(51) Int. Cl.⁵: **G05B 19/04**

(54) Informationsübergabesystem zur Übergabe von binären Informationen.

(30) Priorität: **06.02.86 DE 3603751**

(43) Veröffentlichungstag der Anmeldung:
**09.09.87 Patentblatt 87/37**

(45) Bekanntmachung des Hinweises auf die
Patenterteilung:
**02.05.91 Patentblatt 91/18**

(84) Benannte Vertragsstaaten:
**AT CH DE ES FR GB IT LI SE**

(56) Entgegenhaltungen:
**GB-A- 1 369 305**
**US-A- 4 334 305**

**IBM TECHNICAL DISCLOSURE BULLETIN,
Band 15, Nr. 1, Juni 1972, Seiten 1-3, New
York, US; B.E. BLISS et al.: "Ring interconnection system"**

(73) Patentinhaber: **Siemens Aktiengesellschaft
Wittelsbacherplatz 2
W-8000 München 2(DE)**

(72) Erfinder: **Bury, Joachim, Dipl.-Ing
Othmayrstrasse 35
W-8450 Amberg(DE)**

**Beschreibung**

Informationsübergabesystem zur Übergabe von binären Information

Die Erfindung bezieht sich auf ein Informationsübergabesystem für Automatisierungsgeräte zur Übergabe von binären Informationen zwischen einem Zentralgerät und mindestens einer Peripheriebaugruppe über ein Bus-System, welches Schnittstelleneinheiten zur parallelen Übergabe der binären Informationen zwischen dem Bus-System und den Peripheriebaugruppen aufweist.

Bei bekannten Systemen der obengenannten Art (GB-A-1 369 305) ist ein Parallel-Bus-System vorgesehen, zu dem jedoch Möglichkeiten zur modularen Erweiterung und flexiblen Anpassung an jeweilige Erfordernisse, insbesondere bei den Schnittstelleneinheiten nicht bekannt sind.

Durch die Erfindung soll ein System der obengenannten Art geschaffen werden, das kostengünstig herstellbar, platzsparend und modular erweiterbar ist und insbesondere für kleine Automatisierungsgeräte geeignet ist. Dies wird auf einfache Weise dadurch erreicht, daß die das Bus-System und die mindestens eine Peripheriebaugruppe verbindenden Schnittstelleneinheiten als serielles Ring-Schiebe-Register mit mindstens einem Ringbaustein ausgebildet sind, wobei der Ringbaustein durch Tristate-Verstärker beidseitig zum übrigen Bus-System hin abgeschlossen ist, wobei eine vorhandene Reihenschaltung beliebiger Anzahl von Ringbausteinen durch Hinzuschaltung weiterer Ringbausteine in Reihe zahlenmäßig beliebig erweiterbar ist, indem zu dem einem der als Abschluß dienenden Tristate-Verstärker eines bereits vorhandenen Ringbausteins der eine Tristate-Verstärker des hinzugeschalteten Ringbausteins antiparallel geschaltet ist, so daß sich beide Tristate-Verstärker im Zustand Tristate befinden und daß somit jeweils die äußeren TristateVerstärker der am Anfang und Ende der gesamten Ringbaustein-Reihenschaltung liegenden Ringbausteine den Bus-Abschluß bewirken.

Hier durch läßt sich eine Erweiterung des Informationssystems ohne hardwaremäßige Umverdrahtung erreichen. Weiterhin ist hiermit eine Anpassung an beliebige Anwendungsfälle möglich. Weist jeder Ringbaustein zwei Teileinheiten mit jeweils einer der als serielles Schiebe-Register ausgebildeten Schnittstelleneinheiten auf, wobei die Schnittstelleneinheiten in Reihe geschaltet sind und beidseits jeder Schnittstelleneinheit zusätzliche Tristate-Verstärker geschaltet sind, so ist es hierdurch möglich, der vorhandenen Schnittstelleneinheit eine weitere Schnittstelleneinheit parallel zu schalten, die z.B. eine gegenüber der vorhandenen Schnittstelleneinheit abweichende Anzahl von Bits verarbeiten kann. Eine weitere Vereinfachung ergibt sich, wenn der Ringbaustein mittels integrierter Schaltkreise, vorzugsweise in CMOS-Technik, ausgebildet ist. Eine Verringerung des erforderlichen Platzbedarfs ergibt sich, wenn jede Teileinheit einem Steckplatz für eine Peripheriebaugruppe zugeordnet ist.

Eine Ansteuerung und Informationsübertragung mit geringem Aufwand läßt sich erreichen, wenn jedem Ringbaustein vier Steuerleitungen (4-Bit-Steuer-Bus) zugeordnet sind. Es erweist sich als vorteilhaft, wenn von den vier Steuerleitungen eine den Bus auf einen definierten Ausgangszustand setzt, eine zweite die Funktion des Ring-Schiebe-Registers vom seriellen Schieben auf parallele Übergabe an/von den Baugruppen umschaltet ($\overline{\text{LATCH}}$), eine dritte eine Umschaltung zwischen zwei Eingabeports (Peripheriedaten-und Baugruppenkennungen) durchführt, ohne daß dabei in der Schnittstelleneinheit gespeicherte Ausgabeinformationen für Peripheriebaugruppen verändert werden ($\overline{\text{IDENT}}$) und die vierte den Arbeitstakt ($\overline{\text{CLOCK}}$) angibt. Weiterhin ist es vorteilhaft, wenn die dritte Umschaltung ($\overline{\text{IDENT}}$) anhand der Kennung einer gesteckten Peripheriebaugruppe die Funktionsart des Ringbausteines und der zugehörigen Teileinheit festlegt. Hinsichtlich des zeitlichen Aufwandes bei der Übergabe von Informationen läßt sich eine weitere Vereinfachung erreichen, wenn die Teileinheit tristate-fähige Schreib/Lese-Verstärker aufweist. Um die ordnungsgemäßeFunktion des Bus-Systems auf einfache Weise überwachen zu können, ist es weiterhin von Vorteil, wenn jeder 4-Bit-Information für eine Peripheriebaugruppe ein fünftes Informationsbit nachgestellt ist, das zur Busselbstüberwachung dient. Hierbei hat es sich als vorteilhaft erwiesen, wenn die fünfte Information durch eine Peripheriebaugruppe erzeugt und an die Teileinheit weitergegeben wird. Mit Vorteil steuert die fünfte Information die paralle Informationsübergabe zwischen Ring-Schiebe-Re gister, Teileinheit und Peripheriebaugruppe. Es hat sich als vorteilhaft erwiesen, wenn die Schaltmittel zur Ankopplung der Ringbausteine untereinander durch Tristate-Verstärker gebildet werden. Anstelle von Schieberegistern mit 4-Bit-Informationsin-halt lassen sich Schiebe-Register mit höherem Informationsinhalt ohne Schwierigkeiten verwenden, wenn in dem Ringbaustein weitere Tristate-Verstärker vorgesehen sind, die in Abhängigkeit von weiteren, angekoppelten Ringbausteinen wirksam sind. Um mit einem vergrößerten Informationsvolumen arbeiten zu können, ist es vorteilhaft, wenn jeweils eine Teileinheit durch einen oder mehrere Ringbausteine in einer Peripheriebaugruppe überbrückbar ist. Um den Überbrückungszustand einzelner Schnittstelleneinheiten leicht erkennen zu können, ist es vorteilhaft, wenn an allen Überbrückungsstellen der Ringbausteine eine Einrichtung zur Erzielung eines vorbestimmten Signalzustandes vorhanden ist, die bei Entfernung der Überbrückung wirksam wird. Um Fehlinformationen zu vermeiden ist es weiterhin vorteilhaft, wenn eine Blockiereinrichtung zum Sperren gestörter Informationen vom Bus-System zur Teileinheit vorhanden ist. Als vorteilhaft zur Erkennung und Behebung einer Unterbrechung bei gezogenem Schiebe-Register hat sich erwiesen, wenn bei Wirksamwerden des vorbestimmten Signalzustandes auf dem fünften Bit das Zentralgerät anhand der Änderung des Signalzustandes die Unterbrechung wahrnimmt und einen $\overline{\text{IDENT}}$-Zyklus zur Reaktivierung des überbrückten Ringbausteines ausführt ohne Beeinflussung der in der Teileinheit gespeicherten Ausgabeinformationen an die Peripheriebaugruppen. Die Informationsübergabe bei einem derartigen System erfolgt in vorteilhafter Weise, wenn vom Zentralgerät von einem Ladespeicher Informationen, seriell über den Bus transportiert, den Teileinheiten zur Verfügung gestellt werden und in einem weiteren Speicher die Zustandsdaten der Peripheriebaugruppen gleichzeitig geladen werden und in der nachfolgenden Verweilzeit die Programmbearbeitung erfolgt, wobei vor und nach seriellem Transport die aktuellen Informationen von den Peripheriebaugruppen übergeben werden. Um auch den Zustand des Bus-Systems erkennen zu können, ist es weiterhin vorteilhaft, wenn vor dem Informationstransport zumindest ein ganzzahliges Vielfaches des Informationsquintettes als Kopfkennung im System geladen wird, das nach Ablauf der gezählten Registerschritte von dem Zentralgerät überprüft wird. Eine weitere vorteilhafte Ausführung ist dann gegeben, wenn mit Wirksamwerden des Signals ($\overline{\text{LATCH}}$) der Ausgangsverstärker in Tristate geschaltet wird und der Leseverstärker aktiviert ist.

Anhand der Zeichnung wird ein Ausführungsbeispiel gemäß der Erfindung beschrieben und die Wirkungsweise näher erläutert.

Es zeigen:

FIG 1 eine prinzipielle Darstellung des Informationsübergabesystems mit seriellem Ring-Schiebe-Register und zwischen Peripheriebaugruppe und Bus zwischengeschalteter Schnittstelleneinheit,

FIG 2 die Ausbildung der Schnittstelleneinheit als Ringbaustein, der zwei Schnittstelleneinheiten enthält,

FIG 3 die Möglichkeit der Kopplung der Ringbausteine gemäß FIG 2 zur Erzielung des seriellen Ring-Schiebe Registers,

FIG 4 ein Schaltbild für die Ergänzung der Schnittstelleneinheit zur Verwendung derselben zur Ein- und Ausgabe einer Information,

FIG 5 die Steuerung des Datenflusses durch die Steuerbebefehle CLOCK und $\overline{\text{LATCH}}$ im Zeitdiagramm,

FIG 6 die Möglichkeit des Einsetzens eines Schieberegisters > 4 Bit,

FIG 7 die prinzipmäßige Darstellung des gestörten Betriebes und

FIG 8 eine Erweiterungsmöglichkeit des erfindungsgemäßen Systems unter Verwendung einer Erweiterungsbaugruppe.

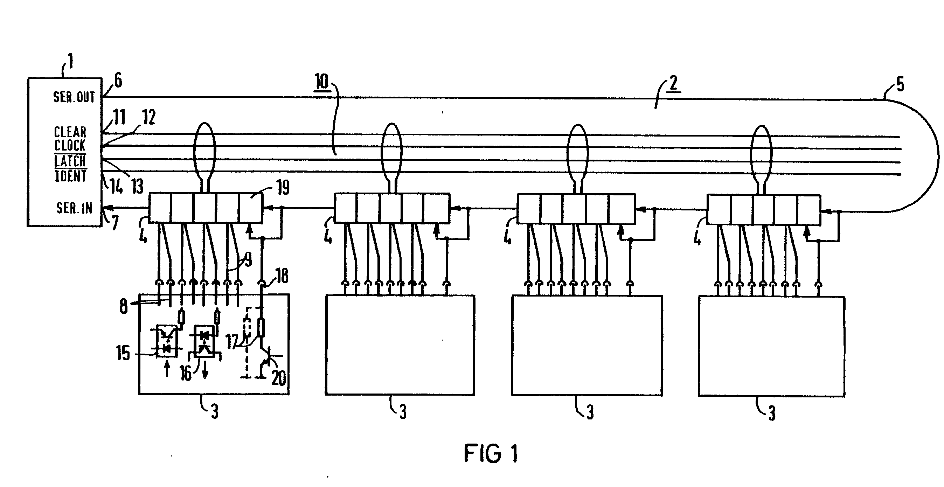

Das in FIG 1 dargestellte Informationsübergabesystem besteht aus dem Zentralgerät 1, auch CPU genannt, dem Bus-System 2 und den Peripheriebaugruppen 3. Die das Bus-System 2 und die Peripheriebaugruppen 3 verbindenden Schnittstelleneinheiten 4 sind als Ring-Schiebe-Register ausgebildet und über die Datenringleitung 5 miteinander verbunden. Die Datenringleitung wird an der Stelle 6 eingespeist (ser.out) und an der Stelle 7 (ser. in) im Speicher des Zentralgerätes abgelegt. Die Schnittstelleneinheit 4 beinhaltet im allgemeinen ein Schieberegister mit vier Bit - durch die vier Kästen in Fig. 1 angedeutet -, das mit der Peripheriebaugruppe 3 über Steckanschlüsse 8 zur Informationsaus oder -übergabe und mit Steckanschlüssen 9 zur Übergabe von Kennungssignalen, wie noch später erläutert wird, verbunden ist. Weiterhin ist mit den Schnittstelleneinheiten 4 der Steuer-Bus 10 in Verbindung gebracht, der aus den vier Steuerleitungen 11, 12, 13 und 14 besteht. Die Steuerleitung 11 trägt das sogenannte CLEAR-Signal, die Steuerleitung 12 das sogenannte CLOCK-Signal, die Steuerleitung 13 das $\overline{\text{LATCH}}$-Signal und die Steuerleitung 14 das $\overline{\text{IDENT}}$-Signal. Abhängig von diesen vier Steuerleitungen werden die Daten auf der Datenringleitung geschoben bzw. parallel übergeben. Die Voreinstellung der Informationsflußrichtung an einer Schnittstelleneinheit 4 geschieht durch Übergabe von Kennungen von der Peripheriebaugruppe zum Seriellen Bus-Decoder. So kann die Schnittstelleneinheit 4 wahlweise eine Eingabe-, Ausgabe- oder gemischte E/A-Baugruppe (Zeiten, Zähler) bedienen. Mit vier Kennungen können bis zu 16 verschiedene Baugruppentypen erkannt werden. Die Kennung und die dadurch festgelegte Funktion des Seriellen Bus-Decoders wird nach der Identifizierung gespeichert. Erst eine erneute Identifizierung bewirkt eine Neueinstellung des Seriellen Bus-Decoders. Die Kennungen können auch als Daten auf das Ring-Schiebe-Register gelegt werden. Ihre Auswertung liefert der CPU eine Abbildung der Peripherie. Das serielle Laden des Busses erfolgt über die Einspeisestelle 6. In einem Datenzyklus werden alle Schieberegister-Informationen durchgeschoben. Der vorhergehende Bus-Zustand wird gleichzeitig eingelesen. Vor und nach jedem Daten-Zyklus werden mit dem Befehl "parallel Laden" die aktuellen Informationen übergeben. Jede Teileinheit des Ring-Schiebe-Registers enthält nach einem Datenzyklus ein aus fünf Informationen bestehendes Telegramm. Das 5. Bit dient zur BusSelbstüberwachung und Fehlerdiagnose. Beim Einlesen wird der Serielle Eingang des SR auf das 5 Bit (True Bit = TB) abgebildet. Die Telegramme für unterschiedliche

3

Peripheriebaugruppen können folgendermaßen aussehen:

```
Telegramm zu einer Ausgabebaugruppe
 |AO  |A1  |A2  |A3  |TB |
                    └0: Information AO...A3 ist richtig und
                        wird ausgegeben,
                     1: Information AO...A3 ist nicht rich-
                        tig und wird nicht ausgegeben.
```

4

Telegramm von einer Ausgabebaugruppe

| J0 | J1 | J2 | J3 | **TB** |

0: Rückinformation der Ausgabebaugruppe ist richtig,

1: Störungsfall; die Information
J0...J3 ist ungültig.

Telegramm zu einer Eingabebaugruppe

| x | x | x | x | **1** |

Die Eingabebaugruppe bestätigt durch
das Umschreiben des TB in 0 die
Richtigkeit ihrer übergebenen Daten.

Telegramm von einer Eingabebaugruppe

| E0 | E1 | E2 | E3 | **TB** |

0: E0...E3 sind wahr

1: Störungsfall; die Informationen
E0...E3 sind ungültig

Telegramm im ‾IDENT‾-Lauf
(wird nur eingelesen)

| K0 | K1 | K2 | K3 | **KA** |

Das Telegramm enthält die Kennungen, die
von den Peripherie-Baugruppen an die
Schnittstelleneinheit übergeben werden.

Telegramm zu einem Leerplatz

| 1 | 1 | 1 | 1 | **0** |

| 0 | 0/1 | 0 | 1 | **1** |

Antwort vom Leerplatz:
Kontrollbit wird umgeschrieben

IDENT
LATCH          } Momentaufnahme der
CLOCK          } Steuersignale an
CLEAR          } P0...P3

Die Kennungen der Peripheriebaugruppen können folgendermaßen aussehen:

```
KO/4   1/5   2/6   3/7
 0     0     0     0   ⎫  zwei Eingaben + zwei Ausgaben
 0     0     0     1   ⎬    (P0, P1)          (P2,3)
 0     0     1     0   ⎬  (nicht rücklesbar)
 0     0     1     1   ⎭

 0     1     0     0   ⎫  vier Eingaben - Typen
 0     1     0     1   ⎬  Standard-Eingabe
 0     1     1     0   ⎬
 0     1     1     1   ⎭

 1     0     0     0   ⎫       vier Ausgaben    Ausgabeverstärker der
 1     0     0     1   ⎬                        D-Flip-Flops werden bei
 1     0     1     0   ⎬→ mit rücklesen         LATCH = 0 in Tristate
 1     0     1     1   ⎭→ ohne rücklesen        geschaltet - rücklesen!

 1     1     0     0   externes Schaltregister mit externer
                       Kennung
 1     1     0     1   externes Schieberegister  Eingabe 8 Bit
 1     1     1     0   externes Schieberegister  Ausgabe 8 Bit
 1     1     1     1   Leerplatz
```

In der Peripheriebaugruppe 3 sind Optokoppler 15, 16 mit den Steckanschlüssen 8 in Verbindung gebracht. Der Optokoppler 15 ermöglicht das Einlesen von Informationen von der Peripherie aus und der Optokoppler 16 das Schreiben von Informationen zur Peripherie hin. Ein Pull-down-Widerstand 17 wirkt über den Steckanschluß 18 mit einem Überwachungs-Bit 19 zusammen, das das Vorhandensein der Baugruppe meldet. Eine gesteckte Baugruppe übergibt mit einem Pull-down-Widerstand eine Null. Damit werden die übergebenen Daten im Telegramm als wahr gekennzeichnet. Wird der Pull-down-Widerstand 17 über einen Transistor 20 geschaltet, können zusätzlich die übergebenen Daten-Bits variiert werden.

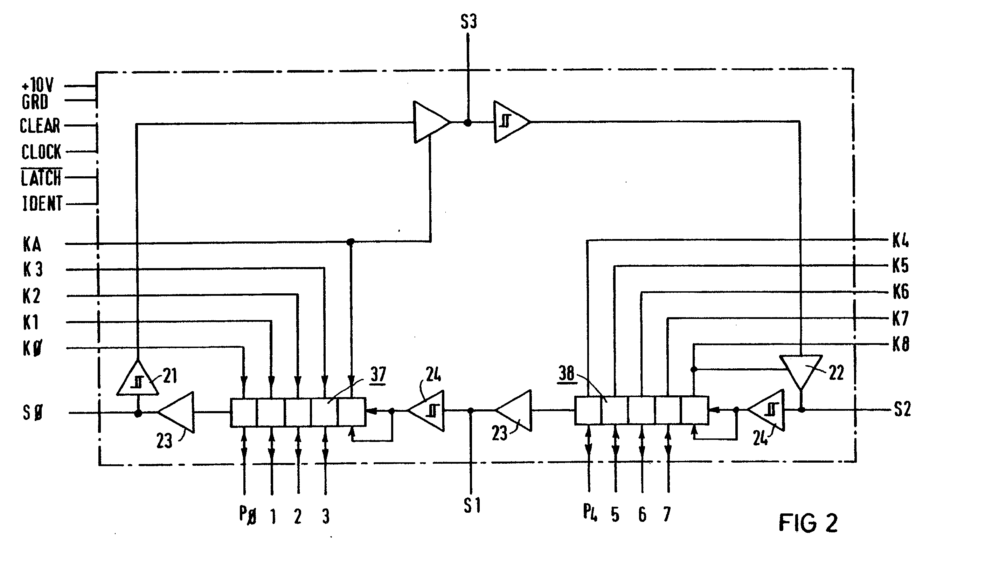

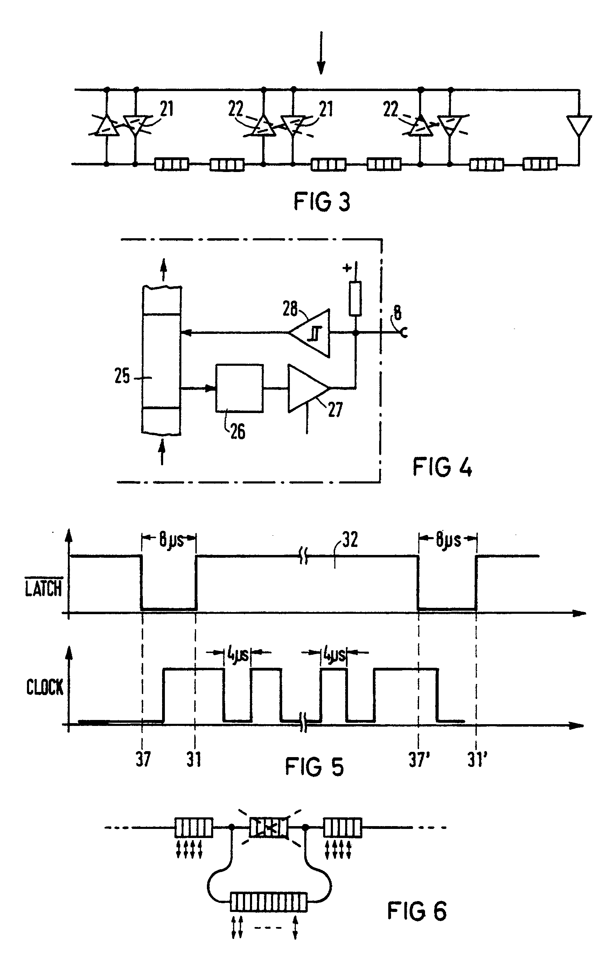

Der nähere Aufbau der Schnittstelleneinheit 4 ist aus FIG 2 zu ersehen. Hier sind zwei Schiebe-Register 4 als Teileinheiten 37, 38 zu einem Ringbaustein zusammengefaßt, der Verstärker 21, 22, die vorzugsweise als Tristate-Verstärker ausgebildet sind, aufweist. Trennverstärker 23, 24, die ebenfalls als Tristate-Verstärker ausgebildet sind, eröffnen die Möglichkeit, der Schnittstelleneinheit 4 eine weitere Schnittstelleneinheit parallel zu schalten, die gegebenenfalls mehr als vier Bit bzw. 5 Bit beinhalten kann. Das interne Schiebe-Register wird hierdurch totgeschaltet und mit einem externen Schiebe-Register überbrückt. Die Wegumschaltung geschieht im IDENT-Zyklus. Hierdurch läßt sich der Datenring in beliebiger Weise durch entsprechende Kennungen vergrößern. Die Verstärker 21, 22 bewirken den Abschluß des Seriellen Bus-Systems, wie Fig. 3 zeigt. Werden mehrere Ringbausteine gemäß FIG 2 miteinander gekoppelt, so schalten sich die parallel liegenden Verstärker 21, 22 auf Widerstand unendlich, d.h. in Tristate bei Verwendung von Tristate-Verstärkern. Hierdurch ist eine Erweiterung des Informationsübergabesystems ohne Schwierigkeiten möglich. Jeder Serielle Koppelpunkt ist bidirektional. Beim Parallel Laden wird als 5. Bit (True-Bit) zusätzlich der Serielle Eingang des SR geladen. Dabei ist der vorgeschaltete Treiber im Tristate. Wie die Ports, haben auch die Seriellen E/A's interne Pull-UP-Widerstände.

In FIG 4 ist eine Schieberegister-Zelle 25 der Schnittstelleneinheit 4 dargestellt. Sie steht mit den Kontakten 8 einerseits über einen Zwischenspeicher 26 und einen Tristate-Verstärker 27 und andererseits in Gegenrichtung über einen Verstärker 28 in Verbindung. Die Schnittstelle kann zum Ein- und Ausgeben

6

einer Information verwendet werden. Beim Lesen muß der Ausgabeverstärker im Tristate sein. Die Steuerung des Kundenschaltkreises bei Informationsübergabe mit den Signalen LATCHund CLOCK ist aus FIG 5 zu ersehen. Hier ist der zeitliche Ablauf des Signals Parallel Laden (LATCH) bzw. Takt (CLOCK) untereinander dargestellt. Zum Zeitpunkt 37 ist der Ausgabeverstärker 27 in Tristate geschaltet. Zum Zeitpunkt 29 werden Daten eingelesen.

Zum Zeitpunkt 30 werden Daten in den Zwischenspeicher eingeschrieben und zum Zeitpunkt 31 wird der Ausgabeverstärker 27 wieder freigegeben. Der Datenzyklus ist mit 32 bezeichnet.

Werden pro Schnittstelleneinheit mehr als 4 Bit benötigt, kann das interne Ring-Schiebe-Register totgeschaltet und mit einem externen Schiebe-Register mit einer größeren Bit-Anzahl überbrückt werden, wie dies Fig. 6 zeigt. Die Weg-Umschaltung geschieht beim IDENT-Zyklus.

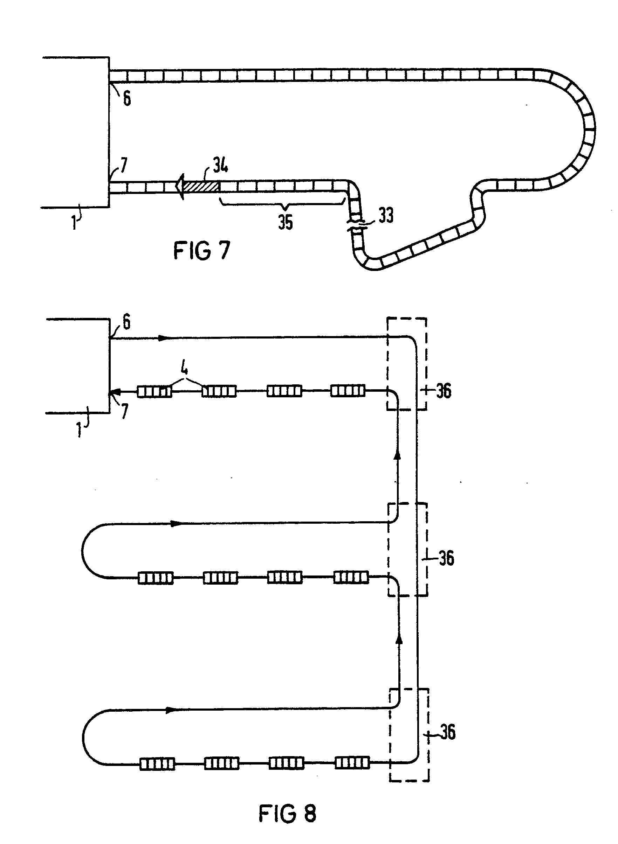

Die Kennungen 1101 und 1110 kennzeichnen externe Schiebe-Register für 8E- oder 8A-Peripheriebaugruppen mit 10 Bit Länge. Während des IDENT-Laufs ist das Schiebe-Register im Bus-Modul aktiv und übernimmt die o.a. Kennungen. Während des Daten-Zyklusses läuft die Information voll über das externe Schiebe-Register. Die Kennung 1100 schaltet den Seriellen Bus-Decoder total aus. Das externe Schiebe-Register übernimmt auch das Auflegen der Kennung. Hinter 1100 können beliebige Parameter an die Zentraleinheit übergeben werden, welche Art und Länge des Telegrammverkehrs im Betrieb festlegen. Beim Ziehen bzw. Stecken von Baugruppen im Betrieb registriert die Zentraleinheit eine Änderung des Signals von 0 - 1 oder umgekehrt. Dadurch wird ein IDENTZyklus angeregt, der die neue Peripheriekonfiguration feststellt. Während des IDENT-Laufes ist die Befehlsausgabe gesperrt; der Zustand der Ausgaben bleibt unverändert. Beim Ziehen und Stecken von 5 Bit-Peripheriebaugruppen wird die Ringleitung nicht gestört; dagegen trennt ein Ziehen von externen Schiebe-Registern die Ringleitung auf. Diese Störung muß von der Zentraleinheit sofort erkannt werden und einen IDENT-Lauf anstoßen. Der Signalzustand von anderen Ausgabebaugruppen darf nicht beeinflußt werden. Kritisch ist die Unterbrechung eines laufenden Datenzyklusses (Telegramm). Die Zentraleinheit schickt hier zur Kontrolle eine Kopfkennung voran und zählt die CLOCK-Impulse. Eine aufgetrennte Datenleitung füllt ein laufendes Bus-Telegramm mit 111... auf, wie dies in FIG 7 prinzipmäßig dargestellt ist.

Hierin ist die gezogene Baugruppe mit der Unterbrechungsstelle 33 angedeutet. Der definierte Kopf des Telegrammes trägt das Bezugszeichen 34. Zwischen dem Kopf 34 und der Unterbrechungsstelle 33 liegt der gestörte Bereich 35, der mit 111... aufgefüllt ist. Damit wird das gestörte Ende des Telegramms als "not true" erkannt und nicht ausgegeben, d.h. die Zustände der betroffenen Ausgänge bleiben unverändert. Der unmittelbar folgende IDENT-Zyklus stellt den Datenweg wieder über das vorher totgeschaltete interne Ring-Schiebe-Register her. Werden Baugruppen im Betrieb gesteckt, so wird die Änderung des 5. Bits von 1 auf Null von der Zentraleinheit registriert. Es erfolgt ein IDENTZyklus, der die neue Peripheriekonfiguration ermittelt. Beim Stecken von externen Schiebe-Registern bleiben diese in Tristate, bis ein IDENT-Zyklus dem Schiebe-Register im Bus-Modul seine Funktionsänderung mitteilt. Nach Beendigung des IDENT-Laufs übernimmt das externe Schiebe-Register den Datenweg.

Der Betrieb des Informationsübergabesystems kann wie folgt vor sich gehen: Beim Anlauf des Informationsübergabesystems steht der Bus im "CLEAR", d.h. alle Ausgänge, Schiebe-Register und Zwischenspeicher stehen auf 1. Nach dem Ende des "CLEAR" schickt die Zentraleinheit auf der seriellen Leitung 6 eine Null ab. Sie zählt die Takte bis zum Eintreffen der "O" am seriellen Eingang 7 und hat damit den Gesamt-Bus-Ausbau ermittelt. Anschließend werden, bei IDENT = 0 die jeweiligen Peripheriebaugruppen-Kennungen aufgelegt. Im folgenden IDENT-Zyklus gibt die Zentraleinheit "1" aus und liest die Kennungen ein. Anhand dieser Kennungsliste weiß die Zentraleinheit, wie die Telegramme aufgebaut werden müssen. Beim ersten Datenzyklus liest die Zentraleinheit die aufgelegten Eingaben und gibt wiederum nur "1" aus. Nach dem folgenden Programmzyklus werden beim Datenzyklus gleichzeitig alle Ausgabewerte übergeben und alle Eingabewerte eingelesen. Hierbei gelten folgende Steuersignale:

CLEAR = 1    - setzt alle Schieberegister auf "1"

            - setzt Ausgänge der D-Flip-Flops auf "1"

            - schaltet Verstärker der seriellen Ausgänge S und S1 in 3 State

            - asynchron; sperrt alle Steuersignale (für int. Funktion)

$\overline{IDENT}$ = 0    - macht Kennungs-$\overline{LATCH}$ transparent

            - schaltet parallele Eingänge S1, P...P3 des Schiebe-Registers auf KA, K...K3 um

            - verriegelt Eingänge der D-Flip-Flops

            - beeinflußt nicht die Ports

$\overline{LATCH}$ = 0    - schaltet Schiebe-Register auf "Parallel Laden"

            - gibt Eingänge der D-Flip-Flops frei

            - schaltet die Verstärker der seriellen Ausgänge in Tristate (- Eingänge für True/Alarm-Bits)

            - schaltet (nur bei 4 Bit-Ausgaben) Ports in Tristate

            - rücklesen. (Bei der Funktion 2E/2A wird vom Eingang des Ausgabeverstärkers gelesen)

CLOCK ⌐⌐    - D-Flip-Flops übernehmen Inhalt des Schiebe-registers, wenn:

            True-Bit = 0 <u>und</u> $\overline{LATCH}$ = 0 <u>und</u> $\overline{IDENT}$ = 1 <u>und</u> CLEAR = 0

CLOCK ⌐⌐    - Schiebe-Register parallel laden ($\overline{LATCH}$ = 0) Information seriell schieben ($\overline{LATCH}$ = 1)

Das erfindungsgemäße Bus-System kann auch durch eine Erweiterungsbaugruppe 36 am Ende der ersten Zeile geöffnet und mit einer weiteren Zeile verbunden werden, wie dies aus FIG 8 zu ersehen ist. Hierdurch ergeben sich kurze Verbindungsleitungen bei fortlaufender Steckplatznumerierung. Durch das erfindungsgemäße Informationsübergabesystem ergibt sich ein kostengünstiges, platzsparendes, modular erweitbares Bus-System, das auch für kleine Automatisierungsgeräte Anwendung finden kann. Das System kann in einem kundenspezifischen IC in C-MOS-Technologie als kleinsten Ringbaustein verwirklicht werden, so daß der Decodieraufwand in der Peripheriebaugruppe entfällt. Es sind keine Abschlußstecker erforderlich. Leerplätze sind ohne Adreßverschiebung möglich. Die Peripheriebaugruppen können im Betrieb ausgewechselt werden.

**Ansprüche**

1. Informationsübergabesystem für Automatisierungsgeräte zur Übergabe von binären Informationen zwischen einem Zentralgerät (1) und mindestens einer Peripheriebaugruppe (3) über ein BusSystem (2), welches Schnittstelleneinheiten (4) zur parallelen Übergabe der binären Informationen zwischen dem Bus-System (2) und den Peripheriebaugruppen (3) aufweist, **dadurch gekennzeichnet,** daß die das Bus-System (2) und die mindestens eine Peripheriebaugruppe (3) verbindenden Schnittstelleneinheiten (4) als serielles Ring-Schiebe-Register mit mindestens einem Ringbaustein ausgebildet sind, wobei der Ringbaustein durch Tristate-Verstärker (21, 22) beidseitig zum übrigen Bus-System (2) hin abgeschlossen ist, wobei eine vorhandene Reihenschaltung mit beliebiger Anzahl von Ringbausteinen durch Hinzuschaltung weiterer Ringbausteine in Reihe zahlenmäßig beliebig erweiterbar ist, indem zu dem einen der als Abschluß dienenden TristateVerstärker (21 oder 22) eines bereits vorhandenen Ringbausteins der eine Tristate-Verstärker (21 oder 22) des hinzugeschalteten Ringbausteins antiparallel geschaltet ist, so daß sich beide Tristate-Verstärker (21, 22) im Zustand Tristate befinden und daß somit jeweils die äußeren Tristate-Verstärker (21, 22) der am Anfang und Ende der gesamten Ringbaustein-Reihenschaltung liegenden Ringbausteine den Bus-Abschluß bewirken.

2. System nach Anspruch 1, **dadurch gekennzeichnet,** daß jeder Ringbaustein zwei Teileinheiten (37, 38) mit jeweils einer der als serielles Schiebe-Register ausgebildeten Schnittstelleneinheiten (4) aufweist, wobei die beiden Schnittstelleneinheiten (4) in Reihe geschaltet sind und beidseits jeder Schnittstelleneinheit (4) zusätzlich TristateVerstärker (23, 24) geschaltet sind.

3. System nach Anspruch 1 oder 2, **dadurch gekennzeichnet,** daß der Ringbaustein mittels integrierter Schaltkreise (IC), vorzugsweise in CMOS-Technik, ausgebildet ist.

4. System nach einem der vorangehenden Ansprüche, **dadurch gekennzeichnet,** daß jede Teileinheit (37, 38) einem Steckplatz für eine Peripheriebaugruppe zugeordnet ist.

5. System nach einem der vorangehenden Ansprüche, **dadurch gekennzeichnet,** daß jedem Ringbaustein vier Steuerleitungen (11, 12, 13, 14) (4-BIT-Steuerbus) zugeordnet sind.

6. System nach Anspruch 5, **dadurch gekennzeichnet,** daß von den vier Steuerleitungen (11 bis 14) eine (11) den Bus auf einen definierten Ausgangszustand setzt ($\overline{\text{CLEAR}}$), eine zweite (13) die Funktion des Ring-Schiebe-Registers vom seriellen Schieben auf parallele Übergabe an/von den Baugruppen umschaltet ($\overline{\text{LATCH}}$), eine dritte (14) eine Umschaltung zwischen zwei Eingabeports (Peripheriedaten und Baugruppenkennungen) durchführt, ohne daß dabei in der Schnittstelleneinheit (4) gespeicherte Ausgabeinformationen für Peripheriebaugruppen verändert werden ($\overline{\text{IDENT}}$) und die vierte (12) den Arbeitstakt ($\overline{\text{CLOCK}}$) angibt.

7. System nach Anspruch 6, **dadurch gekennzeichnet,** daß die dritte Umschaltung ($\overline{\text{IDENT}}$) anhand der Kennung einer gesteckten Peripheriebaugruppe die Funktionsart des Ringbausteines und der zugehörigen Teileinheit (37, 38) festlegt.

8. System nach einem der vorangehenden Ansprüche, **dadurch gekennzeichnet,** daß die Teileinheit (37, 38) tristate-fähige Schreib/Lese-Verstärker (27) aufweist.

9. System nach Anspruch 8, **dadurch gekennzeichnet,** daß die Teileinheit (37, 38) den Ausgang des Tristate-Verstärkers (27) rücklesen kann.

10. System nach einem der vorhergehenden Ansprüche, **dadurch gekennzeichnet,** daß jeder 4-Bit-Information für eine Peripheriebaugruppe ein fünftes Informationsbit nachgestellt ist, das zur Busselbstüberwachung dient.

11. System nach Anspruch 10, **dadurch gekennzeichnet,** daß die fünfte Information durch eine Peripheriebaugruppe erzeugt und an die Teileinheit (37, 38) weitergegeben wird.

12. System nach Anspruch 11, **dadurch gekennzeichnet,** daß die fünfte Information die parallele Informationsübergabe zwischen Ring-Schiebe-Register, Teileinheit (37, 38) und Peripheriebaugruppe (3) steuert.

**13.** System nach Anspruch 12, **dadurch gekennzeichnet**, daß die Schaltmittel zur Ankopplung der Ringbausteine untereinander durch Tristate-Verstärker (21, 22) gebildet werden.

**14.** System nach einem der vorhergehenden Ansprüche, **dadurch gekennzeichnet**, daß in dem Ringbaustein weitere Tristate-Verstärker (23, 24) vorgesehen sind, die in Abhängigkeit von weiteren, angekoppelten Ringbausteinen wirksam sind.

**15.** System nach Anspruch 12, **dadurch gekennzeichnet**, daß jeweils eine Teileinheit (37, 38) durch einen oder mehrere Ringbausteine in einer Peripheriebaugruppe (3) überbrückbar ist.

**16.** System nach Anspruch 15, **dadurch gekennzeichnet**, daß an allen Überbrückungsstellen der Ringbausteine eine Einrichtung (17, 20) zur Erzielung eines vorbestimmten Signalzustandes vorhanden ist, die bei Entfernung der Überbrückung wirksam wird.

**17.** System nach Anspruch 15, **dadurch gekennzeichnet**, daß eine Blockiereinrichtung zum Sperren gestörter Informationen vom Bus-System zur Teileinheit (37, 38) vorhanden ist.

**18.** System nach Anspruch 16 oder 17, **dadurch gekennzeichnet**, daß bei Wirksamwerden des vorbestimmten Signalzustandes auf dem fünften Bit das Zentralgerät anhand der Änderung des Signalzustandes die Unterbrechung wahrnimmt und einen $\overline{\text{IDENT}}$-Zyklus zur Reaktivierung des überbrückten Ringbausteins ausführt ohne Beeinflussung der in der Teileinheit (37, 38) gespeicherten Ausgabeinformationen an die Peripheriebaugruppen (3).

**19.** System nach Anspruch 1, **dadurch gekennzeichnet**, daß vom Zentralgerät (1) von einem Ladespeicher Informationen seriell über den Bus (2) transportiert den Teileinheiten (37, 38) zur Verfügung gestellt werden und in einem weiteren Speicher die Zustandsdaten der Peripheriebaugruppen (3) gleichzeitig geladen werden und in der nachfolgenden Verweilzeit die Programmbearbeitung erfolgt, wobei vor und nach seriellem Transport die aktuellen Informationen von den Peripheriebaugruppen (3) übergeben werden.

**20.** System nach Anspruch 19, **dadurch gekennzeichnet**, daß vor dem Informationstransport zumindest ein ganzzahliges Vielfaches des Informationsquintettes als Kopfkennung im System geladen wird, das nach Ablauf der gezählten Registerschritte von dem Zentralgerät (1) überprüft wird.

**21.** System nach einem der Ansprüche 6 bis 20, **dadurch gekennzeichnet**, daß mit Wirksamwerden des Signals $\overline{\text{LATCH}}$der Ausgangsverstärker (27) in Tristate geschaltet wird und der Leseverstärker (28) aktiviert ist.

## Claims

1. Information delivery system for automation devices for the delivery of binary information between a central device (1) and at least one periphery structural group (3) by means of a bus system (2), which has interface units (4) for the parallel delivery of the binary information between the bus system (2) and the periphery structural groups (3), characterized in that the interface units (4), connecting the bus system (2) and a periphery structural group (3) of which there is at least one, are constructed as a serial ring-shift-register with at least one ring block, wherein the ring block is terminated by means of tristate amplifiers (21, 22) on both sides towards the rest of the bus system (2), wherein a present series connection with any number of ring blocks by additional connection of further ring blocks can be extended in series numerically indefinitely, in that to one of the tristate amplifiers (21 or 22), serving as termination of an ring block already present, there is connected in anti-parallel manner a tristate amplifier (21 or 22) of the additionally connected ring block, so that both tristate amplifiers (21, 22) are set in the tristate state and that thus in each case the outer tristate amplifiers (21, 22) of the ring blocks, lying at the beginning and end of the entire ring block series connection, effect the bus termination.

2. System according to claim 1, characterized in that each ring block has two partial units (37, 38) each with one of the interface units (4) constructed as a serial shift-register, wherein both interface units (4) are connected in series and in addition tristate amplifiers (23, 24) are connected on both sides of each interface unit (4).

3. System according to claim 1 or 2, characterized in that the ring block is constructed by means of integrated circuits (IC), preferably in CMOS technology.

4. System according to one of the preceding claims, characterized in that each partial unit (37, 38) is associated with a socket position for a periphery structural group.

5. System according to one of the preceding claims, characterized in that with each ring block there are associated four control lines (11, 12, 13, 14) (4 BIT control bus).

6. System according to claim 5, characterized in that of the four control lines (11 to 14) one (11) sets the bus into a defined starting state ($\overline{\text{CLEAR}}$), a second one (13) changes the function of the ring-shift-register from serial shift over to parallel delivery to/from the structural groups ($\overline{\text{LATCH}}$), a third one (14) carries out a change-over between two input ports (periphery data and structural group characteristics), without thereby output information, stored in the interface unit (4), for periphery structural groups being changed ($\overline{\text{IDENT}}$) and the fourth one (12) indicates the working cycle ($\overline{\text{CLOCK}}$).

7. System according to claim 6, characterized in that the third change-over ($\overline{\text{IDENT}}$) with the aid of the characteristic of a plugged-in periphery structural group establishes the type of function of the ring block and of the appertaining partial unit (37, 38).

8. System according to one of the preceding claims, characterized in that the partial unit (37, 38) has tristate-capable write/read amplifiers (27).

9. System according to claim 8, characterized in that the partial unit (37, 38) can read back the output of the tristate amplifier (27).

10. System according to one of the preceding claims, characterized in that after each 4-Bit information unit for a periphery structural group there is placed a fifth information bit which serves the bus self-monitoring.

11. System according to claim 10, characterized in that the fifth information bit is produced by a periphery structural group and is forwarded to the partial unit (37, 38).

12. System according to claim 11, characterized in that the fifth information bit controls the parallel information delivery between ring-shift-register, partial unit (37, 38) and periphery structural group (3).

13. System according to claim 12, characterized in that the switching means for coupling the ring blocks with one another is formed by tristate amplifiers (21, 22).

14. System according to one of the preceding claims, characterized in that in the ring block further tristate amplifiers (23, 24) are provided, which are operative in dependence upon further, coupled ring blocks.

15. System according to claim 12, characterized in that in each case a partial unit (37, 38) can be bridged by one or several ring blocks in a periphery structural group (3).

16. System according to claim 15, characterized in that at all bridging points of the ring blocks there is present a device (17, 20) for the attainment of a predetermined signal state, which becomes operative with the removal of the bridging.

17. System according to claim 15, characterized in that a blocking device is present for stopping the passage of distorted information from the bus system to the partial unit (37, 38).

18. System according to claim 16 or 17, characterized in that when the predetermined signal state becomes operative on the fifth bit the central device perceives the interruption with the aid of the change of the signal state and carries out an $\overline{\text{IDENT}}$-cycle for the reactivation of the bridged ring block without influencing the output information, stored in the partial unit (37, 38), to the periphery structural

EP 0 235 559 B1

groups (3).

19. System according to claim 1, characterized in that from the central device (1) from a charging store, information transported serially by means of the bus (2) is made available to the partial units (37, 38) and in a further store the state data of the periphery structural groups (3) are simultaneously charged and in the subsequent duration the programme processing takes place, whereby before and after serial transport the actual information from the periphery structural groups (3) is delivered.

20. System according to claim 19, characterized in that before the information transfer at least one integral multiple of the 5-bit information set is charged as head characteristic in the system, which is examined by the central device (1) after the course of the counted register steps.

21. System according to one of claims 6 to 20, characterized in that when the signal $\overline{\text{LATCH}}$ becomes operative, the output amplifier (27) is connected in tristate and the read amplifier (28) is activated.

**Revendications**

1. Système de transmission d'informations pour des appareils d'automatisation pour le transfert d'informations binaires entre un appareil central (1) et au moins un module périphérique (3) par l'intermédiaire d'un système de bus (2), qui comprend des unités d'interface (4) pour le transfert en parallèle des informations binaires entre le système de bus (2) et les modules périphériques (3) caractérisé par le fait que les unités d'interface (4) raccordant le système de bus (2) (4) et le au moins un module périphérique (3), sont réalisés sous la forme d'un registre à décalage en anneau en série comportant au moins un module en anneau, le module en anneau se terminant des deux côtés par des amplificateurs trois-états (21,22) en direction du reste du système de bus (2), un circuit série présent, formé par un nombre quelconque de modules en anneau pouvant être étendu d'une manière quelconque, concernant le nombre des modules, par un raccordement supplémentaire en série d'autres modules en anneau, par le fait qu'avec l'un des amplificateurs trois-états (21 ou 22), utilisé comme terminaison, d'un module en anneau déjà existant est branché, selon un montage antiparallèle, un amplificateur trois-états (21 ou 22) du module en anneau raccordé de façon supplémentaire, de sorte que les deux amplificateurs trois-états (21, 22) sont situés dans l'état trois-états et que par conséquent les amplificateurs trois-états extérieurs respectifs (21,22) des modules en anneau situés au début et à la fin de l'ensemble du circuit série de modules en anneau, réalisent la fermeture du bus.

2. Système suivant la revendication 1, caractérisé par le fait que chaque module en anneau comporte deux unités partielles (37,38) comportant chacune l'une des unités d'interface (4) réalisées sous la forme d'un registre à décalage en série, les deux unités d'interface (4) étant branchées en série, et qu'en outre des amplificateurs trois-états (23,24) sont raccordés des deux côtés de chaque unité de l'interface (4).

3. Système suivant la revendication 1 ou 2, caractérisé par le fait que le module en anneau est agencé au moyen de circuits intégrés (IC), de préférence selon la technique CMOS.

4. Système suivant l'une des revendications précédentes, caractérisé par le fait que chaque unité partielle (37,38) est associée à un point d'enfichage pour un module périphérique.

5. Système suivant l'une des revendications précédentes, caractérisé par le fait que quatre lignes de commande (11,12,13,14) (bus de commande à 4 bits) sont associées à chaque module en anneau.

6. Système suivant la revendication 5, caractérisé par le fait que parmi les quatre lignes de commande (11 à 14), l'une d'elles (11) positionne le bus dans un état initial défini ($\overline{\text{CLEAR}}$), une seconde (13) commute le fonctionnement du registre à décalage en anneau du transfert en série au transfert en parallèle en direction/en provenance des modules ($\overline{\text{LATCH}}$), une troisième (14) exécute une commutation entre deux accès d'entrée (données périphériques et indicatifs de modules), sans que les informations de sortie mémorisées dans l'unité d'interface (4) pour des modules périphériques soient modifiées ($\overline{\text{IDENT}}$), et la quatrième ligne de commande (12) délivre la cadence de travail ($\overline{\text{CLOCK}}$).

7. Système suivant la revendication 6, caractérisé par le fait que la troisième commutation ($\overline{\text{IDENT}}$) fixe, sur la base de l'indicatif d'un module périphérique enfiché, le type de fonctionnement du module en anneau et de l'unité partielle associée (37,38).

8. Système suivant l'une des revendications précédentes, caractérisé par le fait que l'unité partielle (37,38) comporte des amplificateurs d'enregistrement/lecture (27) aptes à fournir la fonction trois-états.

9. Système suivant la revendication 8, caractérisé par le fait que l'unité partielle (37,38) peut lire en retour la sortie de l'amplificateur trois-états (27).

10. Système suivant l'une des revendications précédentes, caractérisé par le fait que chaque information à 4 bits pour un module périphérique est suivie d'un cinquième bit d'information, qui est utilisé pour le contrôle automatique du bus.

11. Système suivant la revendication 10, caractérisé par le fait que la cinquième information est produite par un module périphérique et retransmise à l'unité partielle (37,38).

12. Système suivant la revendication 11, caractérisé par le fait que la cinquième information commande le transfert parallèle d'informations entre un registre à décalage en anneau, une unité partielle (37, 38) et un module périphérique (3).

13. Système suivant la revendication 12, caractérisé par le fait que les moyens de commutation servant à accoupler les modules en anneau entre eux sont formés par des amplificateurs trois états (21,22).

14. Système suivant l'une des revendications précédentes, caractérisé par le fait que dans le module en anneau, il est prévu d'autres amplificateurs trois-états (23, 24), qui agissent en fonction d'autres modules en anneau accouplés.

15. Système suivant la revendication 12, caractérisé par le fait qu'une unité partielle (37, 38) peut être shuntée par un ou plusieurs modules en anneau dans un module périphérique (3).

16. Système suivant la revendication 15, caractérisé par le fait qu'en tous les emplacements de shuntage des modules, il est prévu un dispositif (17,20) servant à produire un état de signal prédéterminé, qui devient actif lors de la suppression du shuntage.

17. Système suivant la revendication 15, caractérisé par le fait qu'il est prévu un dispositif de blocage servant à bloquer des informations perturbées depuis le système de bus jusqu'à l'unité partielle (37,38).

18. Système suivant la revendication 16 ou 17, caractérisé par le fait que dans le cas où l'état de signal prédéterminé devient actif au niveau du cinquième bit, l'appareil central détecte l'interruption, sur la base de la modification de l'état du signal, et exécute un cycle $\overline{\text{IDENT}}$ pour réactiver le module en anneau shunté, sans influer sur les informations de sortie, mémorisées dans l'unité partielle (37, 38), dans les modules périphériques (3).

19. Système suivant la revendication 1, caractérisé par le fait que des informations sont envoyées par l'appareil central (1) depuis une mémoire de charge aux unités partielles (37,38), moyennant leur transfert en série par l'intermédiaire du bus (2), que les données d'état des modules périphériques (3) sont chargées simultanément dans une autre mémoire et que l'élaboration du programme s'effectue pendant le temps d'attente suivant, auquel cas les informations actuelles des modules périphériques (3) sont retransmises avant et après le transfert en série.

20. Système suivant la revendication 19, caractérisé par le fait qu'au moins un multiple entier du groupe de cinq informations est chargé dans le système en tant qu'indicatif, avant le transfert des informations, ce multiple du groupe de cinq informations étant contrôlé par l'appareil central (1) après le déroulement des pas comptés du registre.

21. Système suivant l'une des revendications 6 à 20, caractérisé par le fait qu'avec la mise à l'état actif du

signal ($\overline{\text{LATCH}}$), l'amplificateur de sortie (27) est commuté sur le mode trois-états et l'amplificateur de lecture (28) est activé.

SER. OUT
CLEAR
CLOCK
LATCH
IDENT
SER. IN

FIG 1

FIG 2

FIG 3

FIG 4

FIG 5

FIG 6

17

FIG 7

FIG 8